# EUROPEAN PATENT APPLICATION

(11) **EP 2 456 190 A1**
(43) Date of publication of application: **23.05.2012**
(21) Application number: 11761966.8
(22) Date of filing: 22.03.2011
(51) Int. Cl.: H04N 5/00

(54) **SET TOP BOX CONTROL METHOD, DEVICE AND SYSTEM**

(30) Priority: 30.03.2010 CN 201010136982
(71) Applicant: Huawei Technologies Co., Ltd., Shenzhen, Guangdong 518129 (CN)
(72) Inventor: NIE, Honghao, Shenzhen Guangdong 518129 (CN)
(74) Representative: Epping - Hermann - Fischer
(86) International application number: PCT/CN2011/072033
(87) International publication number: WO 2011/120392

(57) **Abstract**

The present invention discloses a method, an apparatus, and a system for controlling a set-top box. The method for controlling a set-top box includes: acquiring a button-press signal sent by a remote control; filtering, according to a current running state of the set-top box and a preset state transition table, the button-press signal sent by the remote control; and generating, according to an event corresponding to a filtered button-press signal, a control bar for performing an operation on the current running state of the set-top box. In embodiments of the present invention, after the button-press signal of the remote control is filtered according to the current running state of the set-top box and the preset state transition table, the event corresponding to the filtered button-press signal may be processed, so that an operation of the set-top box may be controlled with a simple method and a low implementation cost; and when software of the set-top box is upgraded, the remote control does not need to be replaced, and the set-top box is well adapted to the remote control, so that resources may be saved.

## Description

This application claims priority to Chinese Patent Application No. 201010136982.9, filed with the Chinese Patent Office on March 30, 2010, and entitled "METHOD, APPARATUS, AND SYSTEM FOR CONTROLLING SET-TOP BOX", which is incorporated herein by reference in its entirety.

### FIELD OF THE INVENTION

The present invention relates to the field of technologies, and in particular, to a method, an apparatus, and a system for controlling a set-top box.

### BACKGROUND OF THE INVENTION

Nowadays, a set-top box is developing rapidly, and various characteristics and functions, for example, a digital photo frame, local high-definition playback, and music playback, are integrated into the set-top box. With an increase of the functions of the set-top box, the number of buttons of a remote control is accordingly increasing, thereby increasing memory difficulties of an operator. The operator may hesitate and get confused while facing numerous buttons with unclear functions.

In order to operate abundant applications and functions of the set-top box through a remote control, set-top box manufacturers adopt a manner of reusing buttons on the remote control. For example, for full-screen preview of pictures in an electronic album as the following diagram, buttons corresponding to operations performed by the operator may be: last picture, next picture, picture zoom-in, picture zoom-out, picture rotation, loop/random/sequential playback mode, and so on. For full-screen playback of a video, buttons corresponding to operations performed by the operator may be: audio track and channel switching, caption switching, standard switching, bookmark setting in playback, and so on. For playback of a music list, buttons corresponding to operations performed by the operator during the playback may be: music list playback mode selection, loop/random/sequential, enabling/disabling a screen saver, adding to a favorite music folder, and so on. With the increase of the functions of the set-top box, the number of buttons of the remote control of the set-top box still cannot be reduced even by adopting the manner of reusing some functions of the remote control. The greater the number of the buttons of the remote control, the higher the design and manufacturing cost, and the larger the size and material consumption of the remote control. When the functions of the set-top box are increased and a software upgrade is performed, buttons of an existing remote control may be incapable of completely matching the functions of the set-top box, so the existing remote control may need to be replaced.

Therefore, an operation of controlling the set-top box by the existing remote control is complex and has a high cost.

### SUMMARY OF THE INVENTION

The present invention provides a method, an apparatus, and a system for controlling a set-top box, so as to solve a defect that an operation of controlling the set-top box by an existing remote control is complex and has a high cost in the prior art, thereby implement a simple operation of controlling the set-top box, reducing the cost, and saving resources.

An embodiment of the present invention provides a method for controlling a set-top box, which includes:
acquiring a button-press signal sent by a remote control;
filtering, according to a current running state of the set-top box and a preset state transition table, the button-press signal sent by the remote control; and
generating, according to an event corresponding to a filtered button-press signal, a control bar for performing an operation on the current running state of the set-top box.

An embodiment of the present invention further provides an apparatus for controlling a set-top box, which includes:
a controller, including a button value filtering module and an event processor, in which the controller is configured to acquire a button-press signal sent by a remote control;
the button value filtering module is configured to filter, according to a current running state of the set-top box and a preset state transition table, the button-press signal sent by the remote control; and the event processor is configured to generate, according to an event corresponding to a filtered button-press signal, a control bar for performing an operation on the current running state of the set-top box.

An embodiment of the present invention further provides a system for controlling a set-top box, which includes any one of the foregoing apparatuses for controlling a set-top box and a remote control, in which the apparatus for controlling a set-top box is disposed in the set-top box; and the remote control is configured to send a button-press signal to the set-top box according to a user operation.

According to the method, apparatus, and system for controlling a set-top box that are provided in the present invention, after a button-press signal sent by a remote control is filtered according to a current running state of a set-top box and a preset state transition table, an event corresponding to a filtered button-press signal may be processed, so that an operation of the set-top box may be controlled with a simple method and a low implementation cost; and when software of the set-top box is upgraded, the remote control does not need to be replaced, and the set-top box is well adapted to the remote control, so that resources may be saved.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG 1 is a flow chart of an embodiment of a method for controlling a set-top box according to the present invention;
FIG 2 is a schematic structural diagram of a first embodiment of an apparatus for controlling a set-top box according to the present invention;
FIG 3 is a schematic structural diagram of a second embodiment of an apparatus for controlling a set-top box according to the present invention;
FIG 4 is a schematic diagram of processing a button-press signal in the second embodiment of the apparatus for controlling a set-top box according to the present invention;
FIG 5 is a schematic structural diagram of an embodiment of a system for controlling a set-top box according to the present invention; and
FIG 6 is a schematic structural diagram of a remote control in the embodiment of the system for controlling a set-top box according to the present invention.

### DETAILED DESCRIPTION OF THE EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

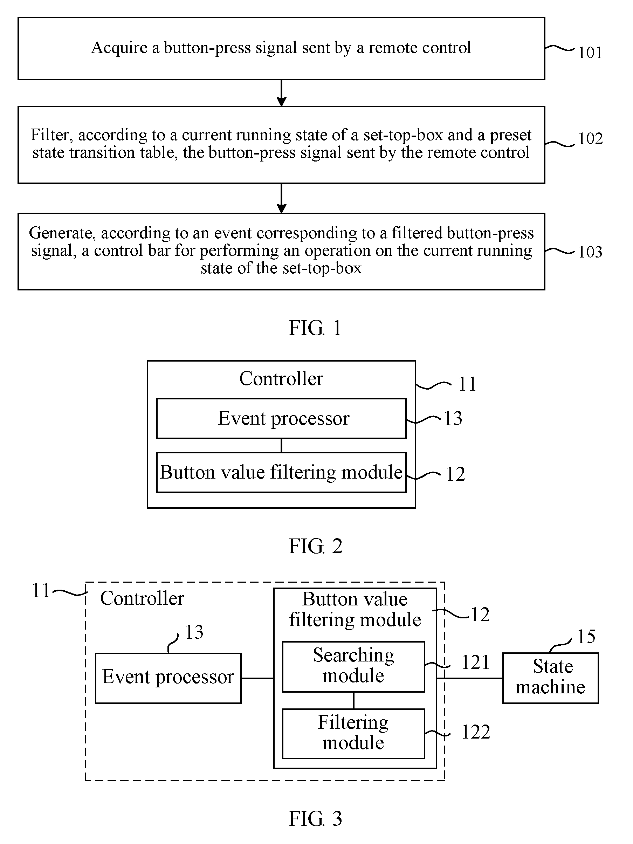

FIG 1 is a flow chart of an embodiment of a method for controlling a set-top box according to the present invention. As shown in FIG 1, the method for controlling a set-top box includes:
Step 101: Acquire a button-press signal sent by a remote control.
Step 102: Filter, according to a current running state of the set-top box and a preset state transition table, the button-press signal sent by the remote control.

The state transition table may include a corresponding relationship between a running state of the set-top box and a button-press signal allowed to be executed under the running state of the set-top box. Furthermore, the current running state of the set-top box includes one of a system playback mode, a media file playback mode, and a media file playback state, or another state. The system playback mode is, for example, a television mode and a DVD mode. The media file playback mode is, for example, a full-screen mode, a browse mode, and a playback mode. The media file playback state is, for example, normal playback, fast forward, and pause. Table 1 is an example of a state transition table. As shown in Table 1, main states under which the set-top box may run include main states such as an electronic album (0x0100), a high-definition video (0x0200), and music playback (0x0300). The main state of the electronic album (0x0100) further includes multiple sub-states: file browse (0x0101), full-screen playback (0x0103), pause (0x0102), and so on. Each sub-state further includes corresponding UI parameter information. For example, the UI parameter information included in the file browse (0x0101) is: adding to a screen saver list, enabling background music, and so on.

**Table 1 State transition table**

| **Main State** | **Sub-state** | **UI Parameter Information on A Control Bar** |
|---|---|---|
| Electronic album (0x0100) | File browse (0x0101) | Adding to a screen saver list |
| | | Enabling background music |
| | Pause (0x0102) | Last picture |
| | | Next picture |
| | | Zoom-in |
| | | Zoom-out |
| | | Rotation |
| | | Playback mode switching (sequential/random/loop) |
| | | Last picture |
| | | Next picture |
| | Full-screen playback (0x0103) | Slow down playback |
| | | Speed up playback |
| | | Playback mode switching (sequential/random/loop) |
| | | Audio track switching |
| | | Caption switching |
| High-definition video (0x0200) | Full-screen playback (0x0201) | Format switching |
| | | Bookmark setting |
| | | Viewing detailed information of a film |
| | | Enabling/disabling a screen saver |
| Music playback (0x0300) | Music playback (0x0301) | Adding to a favorite music folder |
| | | Playback mode switching (sequential/random/loop) |

In Table 1, the main states and the sub-states all may be the current running state of the set-top box, and the UI parameter information is a button-press signal allowed to be executed under each current running state. As shown in Table 1, a specific method for filtering the button-press signal may be: searching, according to the current running state of the set-top box, the state transition table for a button-press signal allowed to be executed under the current running state of the set-top box; and filtering, according to the button-press signal allowed to be executed under the current running state of the set-top box, the button-press signal sent by the remote control.

Step 103: Generate, according to an event corresponding to a filtered button-press signal, a control bar for performing an operation on the current running state of the set-top box.

Events corresponding to button-press signals may be generally classified as call-out events and selection events.

If the event corresponding to the filtered button-press signal is a call-out event, the control bar generated by the set-top box for performing an operation on the current running state of the set-top box is called out under the current running state of the set-top box; or

if the event corresponding to the filtered button-press signal is a selection event, an element on the control bar generated by the set-top box for performing an operation on the current running state of the set-top box is updated under the current running state of the set-top box.

An operator presses a particular button of a remote control under a function corresponding to any user interface (UI interface) of a set-top box, for example, an interface of browsing electronic album, an interface of watching high-definition video, or an interface of listening to music. For example, a user presses a "desktop" button generally when a control bar is not on the user interface of the set-top box. An event corresponding to a button-press signal sent by the "desktop" button may be a call-out event. After receiving the button-press signal of the "desktop" button and filtering out some events that do not belong to the current running state, the set-top box obtains, by filtering, a call-out event that exists under the current running state of the set-top box and is selectable for the operator, for example, popping up a control bar that is capable of performing an operation on the current state. Then, the set-top box pops up a semitransparent control bar in response to the button-press signal of the "desktop" button, in which the control bar displays operations that are selectable for the operator under the current running state. Subsequently, if the operator presses a "left"/"right" button of the remote control and it is assumed that an event corresponding to a button-press signal sent by the "left"/"right" button is a selection event, then after obtaining, by filtering, a selection event that exists under the current running state of the set-top box and is selectable for the operator, the set-top box selects an element on the control bar in response to the button-press signal of the "left"/"right" button. The remote control in the embodiment of the present invention may only have a call-out button and a selection button. The set-top box performs, according to different current states, different processing on button-press signals generated by the same operation of the operator, and displays different control bars and user interfaces according to processing results. Therefore, a structural model of a software system of the set-top box in the embodiment of the present invention may be independent from the user interface, and an adjustment of the user interface does not affect the structural model of the software system. Since the remote control requires a small number of buttons, a layout of the buttons may meet physics of the human body. Moreover, the operation mode of the buttons on the remote control is unified, so the operator does not need to repeatedly remember buttons of the remote control. In addition, the control bar may also improve a visual effect, and is clearer than a button of a remote control in expressing a meaning, thereby providing a clear operation feedback for the operator.

In this embodiment, after the set-top box receives a button-press signal, a current running state of the set-top box is searched for, the button-press signal is filtered according to the current running state of the set-top box and a state transition table, and then an event corresponding to a filtered button-press signal is processed. An operation of the set-top box may be controlled with a simple method and a low implementation cost. In addition, since a remote control having simple buttons may be adopted, when software of the set-top box is upgraded, the remote control does not need to be replaced, and the set-top box is well adapted to the remote control, so that resources may be saved.

FIG 2 is a schematic structural diagram of a first embodiment of an apparatus for controlling a set-top box according to the present invention. As shown in FIG 2, the apparatus for controlling a set-top box includes a controller 11, and the controller 11 includes a button value filtering module 12 and an event processor 13, where:
the controller 11 is configured to acquire a button-press signal sent by a remote control;
the button value filtering module 12 is configured to filter, according to a current running state of the set-top box and a preset state transition table, the button-press signal sent by the remote control; and
the event processor 13 is configured to generate, according to an event corresponding to a button-press signal filtered by the button value filtering module 12, a control bar for performing an operation on the current running state of the set-top box.

Specifically, after the controller 11 receives the button-press signal sent by the remote control, the button value filtering module 12 filters, according to the current running state of the set-top box and the preset state transition table, the button-press signal sent by the remote control; and after the filtering is completed, the event processor 13 generates, according to the event corresponding to the button-press signal filtered by the button value filtering module 12, the control bar for performing an operation on the current running state of the set-top box.

FIG 3 is a schematic structural diagram of a second embodiment of an apparatus for controlling a set-top box according to the present invention. Based on the first embodiment of the set-top box according to the present invention, as shown in FIG 3, the button value filtering module 12 includes:
a searching module 121, configured to search, according to the current running state of the set-top box, the state transition table for a button-press signal allowed to be executed under the current running state of the set-top box; and
a filtering module 122, configured to filter, according to the button-press signal allowed to be executed under the current running state of the set-top box, the button-press signal sent by the remote control.

Furthermore, the set-top box further includes: a state machine 15, configured to store the state transition table of the set-top box.

The event processor 13 is further configured to: if the event corresponding to the filtered button-press signal is a call-out event, call out, under the current running state of the set-top box, the control bar generated by the set-top box for performing an operation on the current running state of the set-top box; or, if the event corresponding to the filtered button-press signal is a selection event, update, under the current running state of the set-top box, an element on the control bar generated by the set-top box for performing an operation on the current running state of the set-top box. Specifically, when an operator performs a button press operation on the set-top box by using a remote control under any user interface (User Interface, UI for short), namely, a man-machine interface, of the set-top box, a remote control driving apparatus, for example, an infrared driver, of the apparatus for controlling a set-top box may receive a button-press signal input by the remote control, and send the button-press signal to the controller 11. The controller 11 may search the state transition table in the state machine 15 for the current running state of the set-top box. The state transition table may include a corresponding relationship between a running state of the set-top box and a button-press signal allowed to be executed under the running state of the set-top box. After the searching module 121 finds, according to the current running state of the set-top box, a button-press signal allowed to be executed under the current running state of the set-top box from the state transition table, the filtering module 122, filters, according to the button-press signal allowed to be executed under the current running state of the set-top box, the button-press signal sent by the remote control to filter out a button-press signal that is not allowed to be executed under the current state. The event processor 13 processes an event corresponding to a button-press signal that is obtained after the filtering. If the event corresponding to the filtered button-press signal is a call-out event, the event processor 13 may call out, under the current running state of the set-top box, the control bar generated by the set-top box for performing an operation on the current running state of the set-top box. If the event corresponding to the filtered button-press signal is a selection event, the event processor 13 may update, under the current running state of the set-top box, the element on the control bar generated by the set-top box for performing an operation on the current running state of the set-top box.

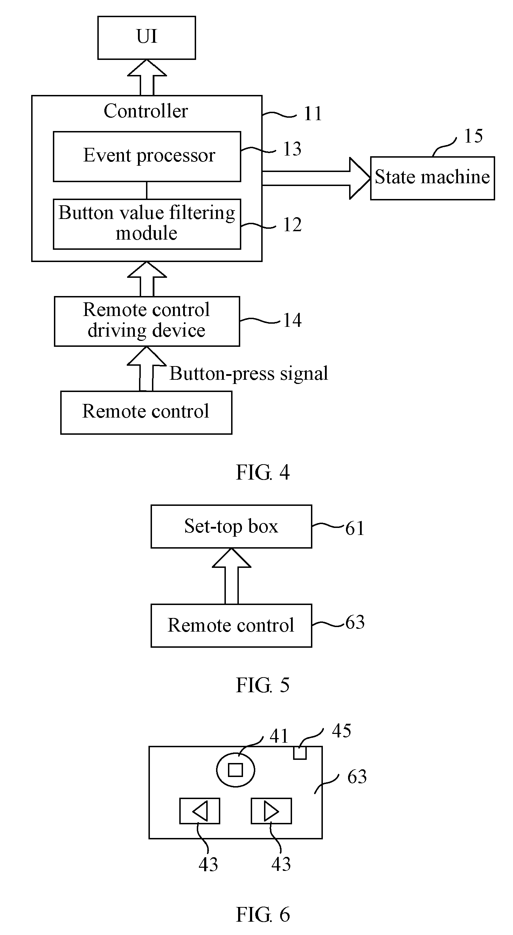

FIG 4 is a schematic diagram of processing a button-press signal in the second embodiment 2 of the apparatus for controlling a set-top box according to the present invention. As shown in FIG 4, after receiving a button-press signal input by a remote control, a remote control driving apparatus 14, for example, an infrared driver, in the apparatus for controlling a set-top box transmits the button-press signal to the controller 11. Assume that a current running state of the set-top box found by the controller 11 from the state transition table as shown in Table 1 in the state machine 15 is full-screen playback (0x0103), and it is found that UI parameter information included in the full-screen playback state is: last picture, next picture, slow down playback, speed up playback, playback mode switching, and so on. The button value filtering module 12 filters the button-press signal according to the current running state of the set-top box to obtain a call-out event corresponding to the button-press signal, and determines a control bar of a UI to be called out under the full-screen state. Then, the event processor 13 updates the current running state of the set-top box stored in the state machine and triggers the UI to update a state displayed on the control bar.

In this embodiment, after receiving a button-press signal, the controller of the apparatus for controlling a set-top box searches for a current running state of the set-top box, the button value filtering module filters, according to the current running state of the set-top box, an event corresponding to the button-press signal, and then, the event processor processes a call-out event or a selection event corresponding to the button-press signal of the remote control. In this way, an operation of the set-top box may be controlled with a simple method and a low implementation cost. Since a remote control having a simple button structure may be adopted, when software of the set-top box is upgraded, the remote control does not need to be replaced, and the set-top box is well adapted to the remote control, so that resources may be saved.

FIG 5 is a schematic structural diagram of an embodiment of a system for controlling a set-top box according to the present invention. As shown in FIG 5, the system for controlling a set-top box includes:
any one of the foregoing apparatuses for controlling a set-top box and a remote control 63, where the apparatus for controlling a set-top box may be disposed in a set-top box 61.

The remote control 63 is configured to send a button-press signal to the set-top box 61 according to a user operation.

FIG 6 is a schematic structural diagram of a remote control in the embodiment of the system for controlling a set-top box according to the present invention. The remote control 63 may include: a call-out button 41, a selection button 43, and a button-press signal transmitting apparatus 45. The button-press signal transmitting apparatus 45 may send a button-press signal of the call-out button 41 or the selection button 43 to a set-top box.

Specifically, an operator may perform a button press operation on the set-top box by using the remote control under any user interface of the set-top box. When a current state needs to be changed, the operator may press a button of the remote control, for example, the call-out button 41 or the selection button 43. The remote control 63 sends, according to the user operation, a corresponding button-press signal to the set-top box 61 through the button-press signal transmitting apparatus. An event corresponding to the button-press signal may be a call-out event or a selection event. After the button value filtering module of the apparatus for controlling a set-top box in the set-top box 61 filters the call-out event or the selection event corresponding to the button-press signal, a signal processing module may process the filtered call-out event or selection event, that is, may call out a control bar for performing an operation on the current running state of the set-top box, or update an element selected on the control bar.

In this embodiment, after the set-top box receives a button-press signal, a current running state of the set-top box is searched for, an event corresponding to the button-press signal is filtered according to the current running state of the set-top box, and then the event corresponding to the button-press signal of the remote control is processed. In this way, an operation of the set-top box may be controlled with a simple method and a low implementation cost. A remote control having a simple button structure, for example, only including a call-out button and a selection button, may be used, so when software of the set-top box is upgraded, the remote control does not need to be replaced, and the set-top box is well adapted to the remote control, so that resources may be saved.

Persons of ordinary skill in the art may understand that all or a part of the steps of the methods according to the embodiments may be implemented by a program instructing relevant hardware. The program may be stored in a computer readable storage medium. When the program runs, the steps of the methods according to the embodiments are performed. The storage medium may be any medium that is capable of storing program codes such as a ROM, a RAM, a magnetic disk, or an optical disk. Finally, it should be noted that the preceding embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of corresponding technical solutions to depart from the spirit and scope of the present invention.

## Claims

1. A method for controlling a set-top box, comprising:
acquiring a button-press signal sent by a remote control;
filtering, according to a current running state of the set-top box and a preset state transition table, the button-press signal sent by the remote control; and
generating, according to an event corresponding to a filtered button-press signal, a control bar for performing an operation on the current running state of the set-top box.

2. The method for controlling a set-top box according to claim 1, wherein the state transition table comprises a corresponding relationship between a running state of the set-top box and a button-press signal allowed to be executed under the running state of the set-top box.

3. The method for controlling a set-top box according to claim 2, wherein the filtering, according to the current running state of the set-top box and the preset state transition table, the button-press signal comprises:
searching, according to the current running state of the set-top box, the state transition table for a button-press signal allowed to be executed under the current running state of the set-top box; and
filtering, according to the button-press signal allowed to be executed under the current running state of the set-top box, the button-press signal sent by the remote control.

4. The method for controlling a set-top box according to claim 1, wherein the generating, according to the event corresponding to the filtered button-press signal, the control bar for performing an operation on the current running state of the set-top box comprises:
if the event corresponding to the filtered button-press signal is a call-out event, calling out, under the current running state of the set-top box, the control bar generated by the set-top box for performing an operation on the current running state of the set-top box; or
if the event corresponding to the filtered button-press signal is a selection event, updating, under the current running state of the set-top box, an element on the control bar generated by the set-top box for performing an operation on the current running state of the set-top box.

5. The set-top box control method according to any one of claims 1 to 3, wherein the current running state of the set-top box comprises one of a system playback mode, a media file playback mode, and a media file playback state.

6. An apparatus for controlling a set-top box, comprising: a controller, wherein the controller comprises a button value filtering module and an event processor;
the controller is configured to acquire a button-press signal sent by a remote control;
the button value filtering module is configured to filter, according to a current running state of a set-top box and a preset state transition table, the button-press signal sent by the remote control; and
the event processor is configured to generate, according to an event corresponding to a filtered button-press signal, a control bar for performing an operation on the current running state of the set-top box.

7. The apparatus for controlling a set-top box according to claim 6, wherein the state transition table comprises a corresponding relationship between a running state of the set-top box and a button-press signal allowed to be executed under the running state of the set-top box, and the button value filtering module comprises:
a searching module, configured to search, according to the current running state of the set-top box, the state transition table for a button-press signal allowed to be executed under the current running state of the set-top box; and
a filtering module, configured to filter, according to the button-press signal allowed to be executed under the current running state of the set-top box, the button-press signal sent by the remote control.

8. The set-top box control device according to claim 6 or 7, wherein the set-top box further comprises: a state machine, configured to store the state transition table of the set-top box; and
the event processor is specifically configured to: if the event corresponding to the filtered button-press signal is a call-out event, call out, under the current running state of the set-top box, the control bar generated by the set-top box for performing an operation on the current running state of the set-top box; or, if the event corresponding to the filtered button-press signal is a selection event, update, under the current running state of the set-top box, an element on the control bar generated by the set-top box for performing an operation on the current running state of the set-top box.

9. A system for controlling a set-top box, comprising the apparatus for controlling a set-top box according to any one of claims 6 to 8 and a remote control, wherein the apparatus for controlling a set-top box is disposed in a set-top box; and
the remote control is configured to send a button-press signal to the set-top box according to a user operation.
